# FASCICULE DE BREVET EUROPEEN

(11) **EP 2 334 165 B1**
(45) Date de publication et mention de la délivrance du brevet: **04.05.2016**
(21) Numéro de dépôt: 09784337.9
(22) Date de dépôt: 11.09.2009
(51) Int. Cl.: A01G 9/02, A47B 81/00, A47G 7/04

(54) **DISPOSITIF OPTIMISÉ D'AMÉNAGEMENT EXTÉRIEUR À L'ESTHÉTIQUE PAYSAGÈRE ÉVOLUTIVE**
VERBESSERTE VORRICHTUNG ZUR NATÜRLICHEN GESTALTUNG VON AUSSENANLAGEN AN GEBÄUDEN
IMPROVED DEVICE FOR EXTERIOR NATURAL ARRANGEMENTS ON BUILDINGS

(30) Priorité: 11.09.2008 FR 0804999
(43) Date de publication de la demande: 22.06.2011
(73) Titulaire: Grzeszczak, Magdalena, 93100 Montreuil (FR); Glazewski, Arkadiusz, 34670 Baillargues (FR); Glazewska, Kamila, 93110 Rosny sous Bois (FR)
(72) Inventeur: Grzeszczak, Magdalena, 93100 Montreuil (FR); Glazewski, Arkadiusz, 34670 Baillargues (FR); Glazewska, Kamila, 93110 Rosny sous Bois (FR)
(86) Numéro de dépôt international: PCT/FR2009/001089
(87) Numéro de publication internationale: WO 2010/029231

(56) Documents cités:
- CA-A1- 2 316 470
- DE-U1-202005 011 061
- US-A- 4 260 206

## Description

Contrairement aux habitants des maisons individuelles, l'habitant d'un immeuble ne dispose pas de moyens d'aménagement pratique et esthétique d'un balcon, d'une loggia, etc., en lui permettant de participer simultanément au développement durable de notre et de son propre environnement, notamment :
- aptes à l'installation d'une flore à verdissement permanent pour constituer des éco-surfaces c.-à-d. des surfaces végétales permanentes offertes à la photosynthèse et qui produisent de l'oxygène et accroissent l'absorption de gaz carbonique sur l'ensemble de l'année principalement en milieu urbain, contrairement aux végétations qui perdent leur feuillage pour plusieurs mois,
- aptes à l'installation et l'utilisation individuelle de générateurs et capteurs d'énergies renouvelables (solaire, éolienne, ... ), etc.,
- aptes à assurer la protection de ses objets divers contre les dégradations, intempéries et pollutions,
- aptes à assurer le reconditionnement harmonieux et esthétique, de toute image ou tout objet disgracieux, p. ex. une unité extérieure de climatisation, vélo,
- aptes à assurer l'embellissement du cadre de vie direct de l'utilisateur et des tiers,
- et de ne pas nuire à l'esthétique et à tout ce qui contribue à l'harmonie de l'immeuble et du quartier.

**Arts antérieurs :** le document CA 2 316 470 (A1) décrit une boîte à fleurs couvre-ordures, ladite boîte comprend une remise décorative et est destiné à dissimuler les contenants à ordures; le document US 4 260 206 décrit un meuble ayant l'aptitude décorative et contenant un dispositif pour cuisiner. Les tentatives précitées sont des structures fermées, dont les capacités d'évolution sont restreintes à un seul domaine concernant la décoration et ne prennent pas en compte les contraintes diverses telles que : sur un balcon créer et protéger des éco-surfaces pour contribuer à accroître la qualité d'air en milieu urbain, augmenter les capacités d'aménagement significatives en surface végétale sempervirente, protéger et cacher le linge étendu et autres objets, vélo ..., ne pas gêner l'évacuation des eaux de pluie, répartir et limiter la charge des aménagements (une dalle de balcon est conçue pour supporter une charge limitée en général à environ 350 kg/m2), respecter une hauteur d'au moins un mètre pour les garde-corps, avec abaissement possible jusqu'à 0,80 mètre au cas où ledit garde-corps a plus de cinquante centimètres d'épaisseur, assurer la compatibilité avec d'autres objets, reconquérir une harmonie esthétique détruite.

**L'invention décrite et illustrée ci-après, un dispositif optimisé d'aménagement extérieur à l'esthétique paysagère évolutive,** apporte une solution aux défauts et lacunes des mobiliers antérieurement connus et apporte de nombreux avantages déterminants, considérés encore à ce jour comme inaccessibles.

Les dispositifs paysagers (A) sont adaptables à toute forme de balcons, terrasses, loggia, toiture, parkings automobiles, etc. et à tout type de garde-corps de balcons, tout en respectant leurs fonctions premières, à savoir :
- ajourés ou transparents : construits de barres métalliques, de vitres, et/ou d'un assemblage métal/béton/vitre, - dans ce cas, selon l'angle de vision, les surfaces de la structure du dispositif (A) visibles du côté de la rue par les piétons, les voisins, comportent de moyens de dissimulation et/ou d'intégration permettant de produire un effet de paysage harmonieux et naturel en offrant une « vue extérieure paysagère » (F), un effet végétal à verdissement permanent et/ou un effet non végétal de paysage naturel intégré à l'environnement proche.
- non ajourés et non transparents: entièrement construits de béton, pierre de taille, etc. - dans ce cas, les surfaces du dispositif (A), visibles du côté de l'intérieur de l'appartement, comportent de moyens de dissimulation - d'intégration offrant à l'utilisateur une « vue intérieure paysagère » (E).

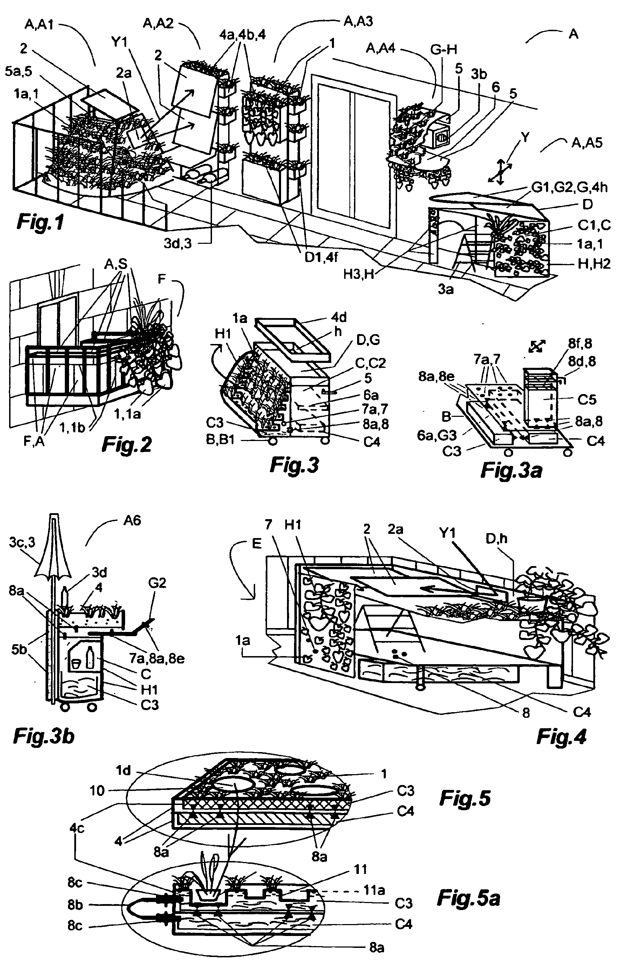

En premier exemple : une variante paysagère (A3) d'un volume paysager (A) tel que présenté en Fig. 1 est fixé au mur en abritant une unité externe de climatiseur (3b), et les moyens de dissimulation (1) fixés sur sa structure permettant le reconditionnement esthétique de ladite unité. En deuxième exemple : une variante (A5) d'un dispositif paysager (A) est apte à couvrir un autre dispositif (A1 ; A7 ; ... A9) ou des objets divers (3), tel que de Fig.1. Ses moyens de dissimulation (1) assurent une double fonction de dissimulation ou d'intégration de lui même (A5) aux environnements proches et dudit autre dispositif (A1 ; A7 ; ... A9). En troisième exemple : une variante (A1) du dispositif paysager (A) peut avoir l'aspect d'un mobilier paysager d'une configuration (A1) comportant des ensembles structurels (B), (C) et (D), à savoir :
▪ un ensemble d'appui (B) sur lequel s'organise le reste du dispositif (A1), cette partie est soutenue et rehaussée par des moyens de déplacement (B1) tels que : socles, pieds (15), une partie basse des parois verticales extérieures et/ou intérieures, roues (15a), etc. permettant de glisser sous ledit dispositif (A1) au moins un des moyens de récupération d'eau (C3 ; C4) tels que : réservoir égouttoir - tiroir, récipient, membrane de collecte ..., tout en respectant les règles d'évacuation d'eau du balcon;
▪ un ensemble intermédiaire (C) assurant une fonction de stockage (C). Ladite partie intermédiaire (C) permet des stockages horizontaux et/ou suspendus et peut être constituée par :
   - une partie couverte et ouverte (C1) - assurant un stockage extérieur non clos (C1);
   - et/ou une partie couverte et fermée (C2) - apte à stocker, abriter, isoler et à être fermée par des moyens de fermeture tels que : coulissement de compartiment (C6 ; C7), recours à des portes à charnières, portes coulissantes, portes escamotables, lesdits moyens de fermeture étant munis ou non de fermoirs tels que : poignées, serrures.
▪ un support (D) servant de partie supérieure (D) et également de surface active sécuritaire (D) ou (D1) - assure une double fonction de support dit sécuritaire permettant d'assurer la stabilisation et le maintien sécuritaire de tout objet (3, 2, 2a, 2c, ....): -par sa propre structure notamment ses hautes bordures (h) protégeant contre le vent, -par son équipement en moyen de fixation divers orientables ou non orientables (5, 5a, 5c, etc.) notamment un abattant ou une membrane déroulable (G1) apte au déploiement et au couvrement des objets supportés (3, 2, 2a, 2c, etc.) par ladite partie (D).

Le dispositif (A) a une multitude de variantes de configurations, il peut prendre une configuration unitaire ayant l'aspect notamment : d'un volume paysager (A4 ; A5), d'une serre (A7), d'un mobilier paysager (A1 ; A2 ; A3 ; A6 ; A8 ; A9) ou des configurations combinées, notamment : des dispositifs paysagers (A) avec des dispositifs non paysagers (A).

L'assemblage de plusieurs dispositifs (A) pouvant avoir différentes aspects et usages, permet de créer des systèmes d'aménagement extérieur optimisé à l'esthétique paysagère évolutive (S) dont l'aspect général présente une harmonie esthétique paysagère dans un endroit donné, tout en respectant les fonctions premières dudit endroit : balcon, fenêtre, etc. ; par exemple Fig.2.

Toute structure (B), (C), (D) ou toute variante du dispositif (A) peut :
- être monobloc dans son aspect, par assemblage amovible ou par fabrication intégrée,
- avoir des dimensions et des formes différentes ou identiques,
- comporter ou constituées de moyens de renforcement,
- comporter au moins une surface active (D1) de directions diverses tels que : verticale, horizontale, en pente, en saillie et/ou temporairement en saillie ... pour remplir les mêmes fonctions que le support (D), à l'intérieur ou à l'extérieur dudit dispositif (A), ou bien comporter une face oblique considéré comme surface active (H3) car elle permet de maximiser l'ensoleillement des végétations placés en position inférieure d'une culture en terrassement ou terrassement chevauché.

L'esthétique paysagère évolutive du dispositif d'aménagement extérieur (A) est obtenue par le choix d'au moins un moyen évolutif qui est apte au démontage et remontage permettant de changer son aspect initial, esthétique ou structurel, en respectant les contraintes techniques et esthétiques d'urbanisme, contraintes préexistantes, présentes, et permettant de respecter des besoins spécifiques futurs changeant au fil des années.

Ces moyens permettent une restructuration intérieure ou extérieure dudit dispositif (A) afin de l'adapter à des besoins nouveaux ou évolutifs.

En exemple, après ravalement d'immeuble il s'agit de pouvoir adapter le dispositif (A) aux nouveaux aspects de l'environnement proche, et de même pouvoir adapter la structure intérieure de stockage.

L'optimisation du dispositif paysager (A) est accrue par le choix de tout moyen collaborant, favorisant la modularité et la flexibilité, l'efficacité, la compatibilité et le maintien du potentiel d'évolution dans le temps des différentes fonctions ou ensembles de fonctions, le choix permettant de rendre possible l'accès à une synergie choisis et pouvant d'assurer l'optimisation de fonctions anciennes et l'apparition de fonctions nouvelles. En exemple de l'esthétique paysagère évolutive et de l'optimisation du dispositif paysager (A): -les panneaux solaires fixés sur des surfaces du gazon naturel (1a); -les mini-turbines éoliennes (2c) fixées sur les surfaces du gazon ou sur les surfaces de flore artificielle (1b) associées aux surfaces de gazon naturel.

Le dispositif paysager (A) se singularise, en ce qu'il est optimisé dans sa structure pour permettre notamment :
- d'offrir le maximum de surfaces actives aux aménagements paysagers qui sont aptes à cohabiter avec des aménagements de moyens de récupération d'énergies renouvelables
- de conférer le maximum de volumes aux moyens d'accumulation et de stockage d'eau de pluie et aux aménagements de stockage utile des objets divers
- d'offrir les aménagements permettant la propreté optimale du dispositif (A) par des accès faciles au nettoyage de ses éléments.

Le dispositif paysager (A) se singularise en ce qu'il permet d'assurer :
▪ une fonction d'aménagement paysager végétal à verdissement permanent laquelle est établie par des moyens d'harmonisation, d'occultation, de dissimulation et des moyens d'intégration (1) tels que : flore à verdissement permanent - sempervirente, qui produit de l'oxygène et accroît l'absorption de gaz carbonique sur l'ensemble de l'année si le climat le permet. Lesdites cultures à verdissement permanent telles que: lierre, surfaces de micro pelouse de gazon naturel (1a) et en option : associées à une flore artificielle (1a) apte à servir d'un support (1a) pour une plante grimpante ou avec toute flore d'ornement (1a) et à entretien et soins réduits. Ledit support (1a) ou la culture p. ex. du gazon (1a) aménagé en terrasses sont des moyens permettant d'avoir la position des feuilles sur plusieurs niveaux destinés à multiplier la surface d'échange pour la photosynthèse et augmenter leur capacité d'exploitation de l'espace aérien.
   Les moyens d'aménagement paysager végétal à verdissement permanent (1a) coopèrent avec les moyens d'aménagement paysager non végétal d'un paysage naturel proche (1b) et peuvent coopérer avec les moyens d'aménagement paysager de moyens de récupération d'énergies renouvelables,
▪ une fonction d'aménagement paysager non végétal d'un paysage naturel proche est établie par des moyens d'harmonisation, de dissimulation et les moyens d'intégration (1) tels que :
   matériaux spécifiques (1b) p.ex. transparents et/ou opaques assurant l'effet de trompe l'oeil, ou similitude d'aspect avec d'autres matériaux, notamment : aspect de fenêtres vitrées, de surfaces carrelées, jeu de couleurs dont l'assemblage de vert imitant la verdure et/ou de beige imitant les façades ou pierres de taille de la façade de l'immeuble, motifs d'imitation de garde-corps (1b), moulures ou ornements décoratifs, images autocollantes pour assurer l'esthétisme d'un balcon déjà construit, pour conserver ou reconstruire une harmonisation de l'environnement architectural concernant notamment : façade d'immeuble, baies vitrées, balustrade, garde-corps, toiture, corniche, lesdits moyens (1b) sont composés et/ou disposés de façon à conférer à la-dite embase (A) un effet optimal de paysage naturel intégré à la construction proche.
      Lesdits moyens (1) peuvent être incorporés à au moins une des surfaces dudit dispositif (A) pendant la fabrication par les moyens tels que : pressage, pressurage, foulage, impression, gravure ... et/ou être apposés par l'utilisateur pour être fixés au moins temporairement par tout moyen de fixation (5).
   ▪ une fonction d'aménagement paysager de moyens de récupération d'énergies renouvelables établie par des moyens tels que : les collecteurs d'énergies renouvelables non orientable et/ou orientable de manière naturel et/ou mécanique : mini-turbine éolienne (2c), des générateurs et des capteurs solaires (2) à plans vitrés, capteurs tubulaires sous vide, de capteurs photovoltaïques (panneaux, film synthétique, etc.) (2) - et tous autres à venir (2) - fonctionnant en toute autonomie ou en collaboration avec des moyens réfléchissant et directifs (2a), orientables ou non orientables, orientables de manière naturel et/ou mécanique, des moyens tels que : paroi inclinée (2d), plate (2b), surface convexe (2e), courbée et saillante (2e), aptes à orienter des rayons solaires vers les capteur se trouvant le cas échéant dans l'ombre, ou aptes à diriger l'écoulement du vent vers les équipements éoliens selon la direction souhaitée : horizontale, verticale, haut, bas. Lesdits moyens réfléchissant et directifs peuvent être installés sur toute surface active d'intérieur et/ou d'extérieur du dispositif (A) et des surfaces environnantes mur, façade, balustre. L'orientation, l'inclinaison et le dimensionnement des moyens de récupération d'énergies renouvelables et des moyens réfléchissants et directifs sont définis en respectant l'esthétique de l'immeuble.
      Lesdits moyens de récupération d'énergies renouvelables et les moyens réfléchissants et directifs sont maintenus au moins temporairement par les moyens de fixation définitifs, amovibles ou orientables (5, 5a,...) pour pouvoir rendre possible une synergie entre tous les moyens structurels choisis aptes à assurer l'optimisation et l'évolution des fonctions. Ledit support (D) étant dit sécuritaire dans ses aptitudes permettant aux objets divers supportés de résister à des surcharges inhabituelles, p.ex. au vent.
      Lesdits moyens de récupération d'énergies renouvelables sont équipés des moyens permettant de créer des circuits fermés, des transmissions, des stockages de l'énergie ...
   ▪ une fonction de stockage d'eau récupérée notamment d'eau des pluies, de surplus d'arrosage, est établie par des moyens de rétention et de réserve d'eau aptes à être interconnectés tels que : réservoirs vertical de stockage d'eau (C5) ; réservoirs horizontal de stockage d'eau (C3, C4), tiroirs mobiles (C4), volumes creux de pieds du dispositif (A), capables de conserver l'excédent d'eau, de récupérer l'eau tels que les condensas d'une unité extérieure de climatisation et des transpirations végétales, les écoulements d'eau d'étendoir à linge.
   ▪ une fonction de stockage sécuritaire des objets divers (3) est établie par des moyens tels que : partie (C) apte à assurer le stockage ouvert (C1) et/ou le stockage clos (C2), parois (G, G1, G2, D, D1, H, ...); pour protéger, notamment : sèche linge (3a), unité extérieure de climatiseur (3b), ballon d'eau chaude, vélo, escabeau, plantes, ... , prises électriques, pompe à eau, certains appareils électroménagers.
   ▪ une fonction de distribution des eaux est établie par des moyens de collecte et d'écoulement d'eau (8) naturels et/ou mécaniques et/ou électriques tels que : perforations (8e), orifices, perforation orientée obliquement (8a), tuyauterie (8b), pompe à eau, robinets (8c), gouttières, rainurage, pentes des parois, filtres d'épuration (8f), moyen (8d), en vue d'irrigation et/ou de humidification de la flore, des stockage desdites eaux et/ou d'évacuation le trop plein à l'extérieur dudit dispositif (A). Lesdits moyens de distribution (8) coopèrent avec des ouvertures et fermetures mobiles se trouvant sur tout passage d'eau et de sa vaporisation, avec des moyens de filtration et d'épuration des eaux de pluies par complexion de filtres retenant des impuretés, jusqu'aux aménagements de stockage sécuritaire du liquide ( C3 ;C4 ;C5).
   ▪ une fonction de ventilation est établie par des moyens (7) naturels et/ou mécaniques et/ou électriques tels que : bouches d'aération, orifices ou fentes pour le passage de l'air, grilles obturatrices, dispositif de ventilation électrique (7a), des ouies obliques d'aération (7a), protubérances (7b) pour aérer les objets stockés et les moyens structurels du dispositif (A).
   ▪ une fonction d'herméticité, d'étanchéité, isolation thermique, isolation phonique mise en oeuvre par des moyens tels que : matériaux isolants thermiques, joints, mousse isolante, silicones, mèches fines d'étanchéité (5f), double feuillure (5e), alvéoles, panneaux amovibles isolants aptes à adjonction à la structure d'embase (A). Les susdits moyens sont choisis pour assurer les critères les plus élevés de protection contre toute forme d'intempéries, de pollutions atmosphériques, d'ensoleillement excessif des objets divers.
   ▪ une fonction de solidarisation, de liaison et de fixations de tout élément ou moyen de la structure intérieure et/ou extérieure dudit dispositif (A) et des objets divers est établie par des moyens de maintien sécuritaire, de stabilisation et de fixation (5) pouvant rendre les moyens fixés au moins temporairement fixé de façon amovible, orientables ou définitive, par les moyens tels que : vissage, encliquetage, collage, support (5a), cavité (5b) sans fond, moyens décoratifs de fixation (5c), panneaux à feuillure (5d ; 5e) aptes à être incorporés dans les profilés des bordures des surfaces latérales ou frontales de la structure (A), etc. et permettent d'assurer à ladite structure (A) à la fonction d'amovibilité, de modularité, de reconfiguration, de stabilisation et de maintien sécuritaire dudit dispositif (A) et de tout objet stocké et/ou supporté.
   ▪ une fonction d'aménagement flexible de volumes de stockage sécuritaire intérieur et extérieur permettant la modularité des usages, la restructuration, la reconfiguration de l'extérieur et de l'intérieur dudit dispositif (A) selon les besoins ponctuels de l'utilisateur. Ladite fonction se singularise en ce que, tout élément de la structure (A) par exemple : étagère perforée rétractable et/ou pliable (6), table perforée rétractable et/ou pliable (G2), tiroir (14), paroi, petit placard (C6, C7) comportant des perforations, moyens de solidarisation, etc., ne font pas d'obstacles mais sont aptes à collaborer avec un moyen tels que : de ventilation, de récupération et de distribution des eaux.
   ▪ une fonction de support sécuritaire est établie par des moyens d'agencement et de fixation consistant en une des surfaces des accessoires amovibles et/ou des surfaces actives (D1, D) dudit dispositif (A) telles que : plates, galbées, horizontales, verticales, obliques, en saillie, disposées notamment : en cascade, en terrassements, en terrassements chevauché, en incliné, sur une pente, aptes à installer divers moyens notamment : moyens de collecte d'énergie renouvelable, moyens réfléchissants et directifs, bacs paysagers amovibles et/ou aptes à permettre constituer la position des feuilles sur plusieurs niveaux destinés à multiplier la surface d'échange pour la photosynthèse et augmenter leur capacité d'exploitation de l'espace aérien.
   ▪ une fonction de visibilité des objets stockés est établie par des ouvertures et des matériaux transparents sur au moins un côté du dispositif (A) vu de l'intérieur par le locataire, afin assurer la visibilité des objets stockés : pour vérifier l'état du linge à sécher, profiter en hiver de la beauté de la flore protégée.
      Dispositif paysager (A) se singularise, en ce qu'il est réalisé en au moins un matériau :
      - résistant aux intempéries et changements de temps (pluie, neige, vent, gel, chaleur),
      - unique, composite, rigide, élastique, l'assemblage de matériaux différents,
      - de matériaux spécifiques : transparents ou translucides pour constituer une serre. Dispositif (A), se singularise
      - en ce que, peut avoir des dimensions différentes, toute forme et tout aspect, p. ex. fleur, commode d'angle, colonne, aspect de tronc d'arbre, en harmonie avec l'environnement proche, dont la façade d'immeuble. Placé du côté du garde-corps d'un balcon ses dimensions privilégiées sont inférieures ou égales à la hauteur du garde-corps ; placé du côté de la façade, ledit structure (A) peut dépasser la hauteur du garde-corps du balcon, p. ex. ressembler à une armoire paysagère (A1),
      - en ce que, tout ses éléments structurels tels que : parois horizontales, parois latérales, cloisons et étagères, tiroirs, tablettes réglables, ..., peuvent avoir des moyens de renforcements verticaux et/ou horizontaux tels que : socles, alvéoles, nervures, pour rendre sa structure apte à satisfaire les contraintes des objets à stocker ou à supporter ;
      - en ce qu'il comporte des moyens de solidarisation et de liaison tels que : encliquetage, collage, cavités avec ou sans fond, ainsi que les formes des éléments structurels permettant l'assemblage notamment par superposition, encastrement oblique ou non, coulissement, de ses éléments structurels tels que : (B ; C ; D ; G ; C3 ; H )
      - en ce qu'il comporte des moyens de support d'intérieur tels que : perforations, taquets, tablettes, cordons, barres, compartiments, aménagés à son intérieur de façon à étendre le linge, suspendre, ranger p.ex. l'étendoir plié ;
      - en ce qu'il peut être équipé p.ex. de prises électriques, d'allumage naturel et/ou mécanique, de lampes à basse tension à encastrer pour assurer une fonction additionnelle, mais aussi équiper à son goût une terrasse.

      Dispositif paysager (A) se singularise, en ce qu'il est posé et/ou suspendu et/ou incorporé et/ou encastré et/ou apte à constituer partiellement ou entièrement, la structure de son environnement notamment : le mur, la façade, le garde-corps.
      Dispositif paysager (A) se singularise, en ce qu'il a une embase de structure imperméable posée ou fixée, constituant au moins un volume de stockage d'objets divers et comporte des surfaces actives permettant audit dispositif d'assurer des fonctions divers. Ladite surface active notamment (D ; D1 ; H) est disposée notamment en terrasses, en chevauchement, en pente, à plat ; en saillie, dudit dispositif (A),

L'invention est décrite, puis illustrée ci-après dans certaines de ses variantes :
La **Fig.1** représente un ensemble de variantes (A1), (A2), (A3), (A4) et (A5) de dispositif paysager (A) de dimensions différentes et de hauteurs différentes par rapport au balustre du balcon. Les variantes (A1), (A2), (A3) ont un aspect de mobilier paysager (A), comportant des moyens de dissimulation et d'intégration (1) tels que, des micro pelouses de gazon et des plantes suspendues (1a) implantés dans des accessoires paysagers amovibles (4) : plateau- micro pelouse (4a), plateau- mixte (4b), bac paysager (4f) où directement dans un support (D) et un support en saillie (D1) ou temporairement saillant - rétractable et pliable. En leur intérieur, non visible sur le dessin, lesdites variantes abritent respectivement : en (A1) un ballon d'eau ; en (A2) du linge étendu sur des barres amovibles et déplaçables selon la taille du linge à suspendre, ainsi que des bouteilles (3d) - visibles dans le compartiment du bas ; en variante (A3) un vélo pendu verticalement, un escabeau et divers outils posés sur des étagères ou pendus aux parois et au plafond.

Pour conserver la clarté du dessin, les variantes (A1) et (A2) se restreintes à trois capteurs solaires (2) fixés par les supports (5a) et un moyen réfléchissant (2a) du rayonnement pour diriger les rayons solaires selon la flèche (Y1) vers les capteurs (2) lorsqu'ils se trouvent dans l'ombre. Lesdits moyens (2) et (2a) peuvent être orientables. La variante (A1) a une forme d'aspect tronconique avec l'implantation du gazon en terrassement ou terrassement chevauché pour optimiser la surface de micro pelouse (1a) afin de produire le maximum d'oxygène dans un endroit non habituel.

La variante (A4) est un volume creux constitué d'une membrane (G-H) portant de la verdure en qualité d'aménagement végétal à verdissement permanent (1a) autant que des moyens de dissimulation (1) et comprend une étagère (6) comme partie intégrante. Ladite étagère a des moyens d'évacuation d'eau condensée (non visibles sur le dessin) et elle est en légère pente pour éloigner du mur l'écoulement d'eau. Ce système (A4) est suspendu et accroché au mur aux moyens de fixation (5) pour occulter l'unité extérieure (3b) d'un climatiseur.

La variante (A5) offre un volume partiellement clos assurant un stockage extérieur non clos (C1) et est apte à couvrir et à faire bénéficier de son aspect paysager divers objets dont des dispositifs (A). C'est une variante dont la partie supérieure (D) est un couvercle ouvrable (G1), rigide ou élastique, amovible ou fixe, pouvant se plier, incliner, s'enrouler et se déployer selon la flèche (Y) dans toutes les directions et être maintenu ouvert selon l'inclinaison souhaitable par un support (5) (non présenté). Le panneau (G1) pour créer l'ombre ou autre protections comporte au moins un écran en film plastique ou en verre tels que : anti-rayonnement, métallisé, non éblouissant, non glissant, étanche ou respirant, perméable à la vapeur d'eau. La variante (A5) est apte à couvrir et protéger tout dispositif (A).

Lesdits moyens (G1) et (D) appartiennent à la famille des parois horizontales (G) peuvent dimensionnellement déborder la partie centrale (C) constituée de parois ou surfaces actives (H, H1, H2, H3) de la famille des parois verticales (H) pour servir p.ex. d'une table à manger (G2), ou pour constituer un moyen de stockage couvert et ouvert (C1). Ce dispositif (A5) protège et cache un sèche linge (3a), ses parois verticales (H) ne sont pas uniformes en surface et en hauteur.

Ledit dispositif (A5) de hauteur plus petite peut être utilisé comme un accessoire paysager ou non paysager, amovible ou fixe (4g) et être adaptable notamment : -pour couvrir divers objets ; -servir de plateau p.ex. occultant et protégeant la végétation des pluies abondantes ou des rayons solaires, p.ex. par des moyens de protections thermiques (4h) tels que : ensemble des écrans en matières diverses ou des films plastiques exfoliatifs, anti-rayonnement, métallisés, non éblouissants, étanches ou respirant, perméables à la vapeur d'eau, etc. Les pieds (H3) et/ou les parois horizontales (H) de tous dispositif (A) peuvent être structurés en volume creux pour récupérer et stocker l'eau.

La **Fig.2** est une vue extérieure (F) d'un système (S) de l'ensemble des dispositifs paysagers (A) dissimulés par des moyens d'harmonisation et de dissimulation (1) notamment de verdissement permanent (1a) et de moyens imitant (1b) l'aspect des pierres de taille de la façade de l'immeuble. Lesdits mobiliers (A) sont de même hauteur, inférieure à celle du balcon. Ils comportent des capteurs solaires sur toute leur face supérieure, un ballon d'eau chaude et une pompe à eau (non visibles sur le dessin). Lesdits mobiliers (A) comportent des moyens de récupération et d'évacuation d'eaux de pluie connectés avec la gouttière d'immeuble (non visibles sur le dessin).

La **Fig.3** montre une variante d'une embase (A) constitué de parties superposées (B), (C), (D). La partie (B) possède des roulettes de déplacement (B1), la partie (C) assure le stockage clos (C2). La paroi paysagère (H1) sert de porte de fermeture de manière naturel et/ou mécanique et elle comporte des moyens de verdissement permanent engazonnés (1a) aménagés en terrasses. La terre engazonnée (1a) assure le rôle d'un excellent isolant acoustique, thermique et de divers ondes. La porte (H1) comporte des bouches d'aération (7a) de ventilation (7) et des perforations (8a) de moyens d'écoulement et d'évacuation d'eau (8) afin la diriger vers le réservoir d'eau (C3). Le surplus d'eau du réservoir (C3) est conduit par des orifices (8a) à l'intérieur du bac de réserve d'eau (C4) ou à l'extérieur dudit dispositif (A). Ledit réservoir (C4) peut remplir des fonctions supplémentaires p.ex. étagère, maintien de la fraîcheur. Les rebords (h) de la partie supérieure (D) ont une hauteur (h) leur permettant de remplir plusieurs fonctions sécuritaires, notamment support et dissimulation d'objets divers (3, 2, 2a, 2c ...), protection contre le vent et contre le dessèchement de la terre. La partie (D) est une paroi horizontale (G) légèrement en pente pour écouler l'eau, elle reçoit un cadre (4d) comme accessoire (4) permettant d'augmenter la hauteur protectrice (h) du mobilier (A).
Ledit mobilier est apte à être immobilisé contre le mur par des moyens de fixation (5) de sa face arrière. En son intérieur il contient également une étagère amovible perforée (6a) comportant des moyens de fixations tels que : des perforations permettant l'accrochage aux crochets des parois (H) (non présentés) pour faire également de ladite étagère (6a) un moyen de renforcement, maintien et fixation desdites parois (H) contre leur écartement ou leur inclinaison.

La **Fig.3a** illustre une vue partielles de la même variante qu'en **Fig.3** et montre la compatibilité et la collaboration réciproque des moyens d'évacuation, d'irrigation et de transmission d'eau (8) entre plusieurs réservoirs de stockage d'eau, deux horizontaux (C3) et (C4) et un vertical (C5). Les réservoirs (C3, C4, C5) comportent des perforations et/ou des orifices (8a) qui créent les circuits ouverts ou fermés des communications réciproques entre lesdits réservoirs. Il suffit de déplacer les réservoirs selon les flèches pour p.ex. : de superposer des perforations ou orifices (8a) du réservoir (C5) sur les perforations ou orifices (8a) du bac (C4) pour que le circuit soit ouvert ou bien de décaler leurs positions pour qu'il soit fermé.

Le réservoir vertical (C5), comme tout autre réservoir d'eau, comporte également un moyen de récupération et d'arrivage d'eau de gouttières (non visibles sur le dessin), un moyen d'évacuation de surplus d'eau (8d) vers l'extérieur dudit réservoir pour être dirigé vers les gouttières, ainsi qu'un filtre (8f) comme moyen de filtration d'eau. L'étagère (6a) constitue une paroi horizontale perforée (G3) qui comporte des moyens (7a, 7, 8a, 8).

La **Fig.3b** montre une variante (A6) présentant une structure intérieure aménagée de façon optimisée pour offrir une grande capacité d'accumulation d'eau de pluie (C3). L'évaporation de cette eau au travers des perforations (8a) permet d'humidifier le gazon logé dans le moyen de verdissement permanent (4). Un moyen de stockage fermé (C2) se trouve entouré par l'eau du réservoir (C3) et permet de garder au frais des boissons et des verres. Un moyen de fixation (5) en forme de surface inclinée sans fond (5b) permet de maintenir un parasol (3c) et des objets divers (3) p. ex. moustiquaire. Ledit dispositif (A6) comporte une table à manger (G2) rétractable par glissement dans la structure dudit mobilier (A6) et dépliable selon l'axe (X) pour agrandir sa surface utile, pareillement la structure d'une embase (A) peut comprendre p. ex. une chaise perforée ou non perforée, rétractable et/ou pliable. L'utilisateur peut poser une bouteille (3d) ou des plats sur ledit gazon pour pouvoir pique-niquer sur le balcon dans la position confortable, assise sur une chaise. La table (G2) se trouve entre deux moyens (4) et (C3) fermés par la porte (H1). Pour créer le passage de l'eau et de sa vapeur entre les deux moyens (4, C3), la table (G2) comporte des perforations de ventilation (7a), perforations d'évacuation (8a), perforations d'irrigation (8e) qui se superposent aux perforations (7a, 8a, 8e) desdits moyens (4) et (C3).

La **Fig.4** montre la multifonctionnalité d'une variante d'un dispositif (A) et la synchronisation des différents moyens compatibles. L'eau du linge déplié sur un sèche-linge s'écoule par les moyens (8) vers un égouttoir amovible de stockage (C4). Les moyens de ventilation (7) et un support en saillie (D1) et un bac paysager (4f) sont aménagées sur la porte (H1) habillée d'une flore artificielle (1a) en constituant une partie de la vue intérieure paysagère (E).

La **Fig. 5** montre une vue partielle d'un accessoire de verdissement permanent (4) d'un dispositif (A), composé d'un plateau -pots (4c) et un bac de rétention d'eau (C3) et en option un bac de réserve d'eau (C4). Le plateau -pots (4c) est munie d'une surface (1) pour cultiver du gazon, est munie d'orifices variés (10) aptes à recevoir divers pots de fleurs (1d) et est aménagé de manière à constituer également un bac (C3). L'accessoire (4c) permet la séparation des racines des différentes plantations (p.ex. gazon et fleurs) en rendant possibles des plantations diverses optimisées, p. ex. racines courtes dans une petite profondeur de terreau ou de substrat avec à côté des racines longues exigeant une grande profondeur de terre, cultures qui ne se supportent pas, nuisibles, envahissantes etc. La variation de dimension desdits orifices (10), avec fond ou sans fond, autorise le réglage en hauteur de différents pots de fleur (1d).

La **Fig. 5a** représente la coupe d'un accessoire (4) telle que représentée en Fig. 5, munie de branchements de tuyauterie (8b) et deux robinets (8c) permettant remplissage, évacuation vers les gouttières et transfert d'eau entre le bac de rétention (C3) et le bac de réserve (C4). En option ledit plateau -pots (4c) comprend un rehausseur -égalisateur (11) permettant l'ajustement des niveaux (11a) des parties vertes de fleurs (1d) et du gazon (1) à la sortie de la terre, ladite égalisation du niveau de la terre de différentes cultures permet d'obtenir un aspect harmonieux du décor végétal.

En option, ledit accessoire (4) peut comporter un plateau- mixte (4b) pour assurer des cultures de végétations mixtes, qui se distinguent entre elles, par les différentes grandeurs de racines donc qui exigent différentes profondeurs de terre. Ledit plateau- mixte (4b) ressemble à un plateau- micro pelouse (4a) muni d'un fond avec une ou des cavités permettant obtenir des profondeurs divers.

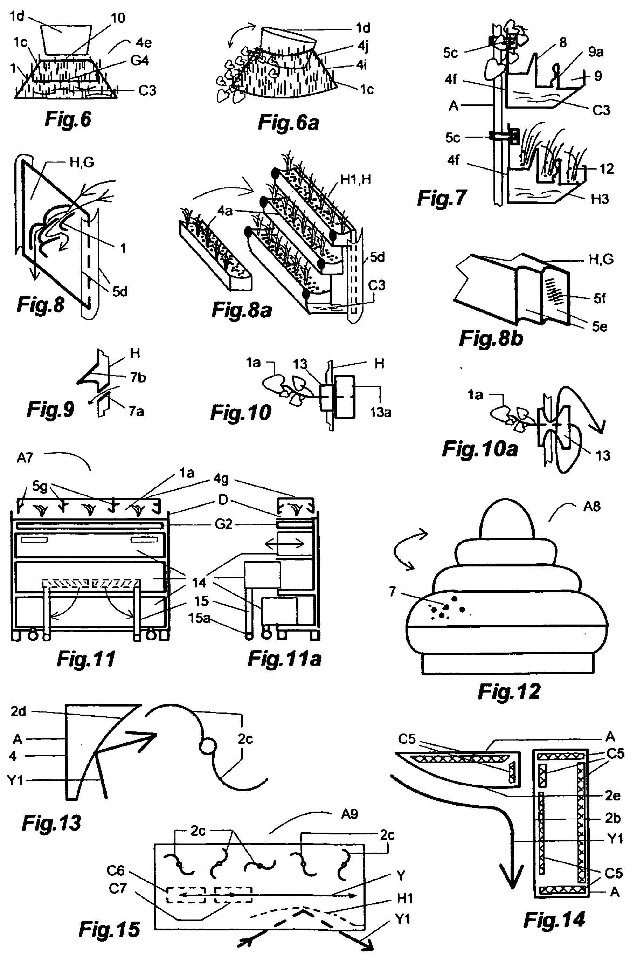

La **Fig.6** montre une variante d'accessoire (4) représentant un rehausseur paysager (4e) apte à recevoir, par l'orifice (10), un pot de fleur (1d) posé sur une paroi horizontale perforée (G4). Ledit rehausseur (4e) est de forme tronconique et comporte un réservoir d'eau (C3). Le moyen (4e) est paysager car il est recouvert d'un cache paysager (1c) enfilé sur ledit moyen. Le cache (1c) est constitué p. ex. de gazon artificiel (1a) maintenu dans la texture extensible d'un textile, ledit cache peut couvrir des objets divers, même un dispositif (A), pour les dissimuler dans l'environnement.

La **Fig. 6a** représente un rehausseur paysager (4i) sans moyen (C3) et (G4), ledit rehausseur par son orifice (10) peut maintenir les pots (1d) en position inclinée selon la flèche. Ledit rehausseur (4i) d'une petite hauteur se transforme en un anneau ou une auréole (4j) apte à auréoler un pot de fleur (1d) pour permettre d'agrandir son diamètre et d'adapter ledit pot de fleur (1d) pour des orifices (10) de grands diamètres tels que illustrés dans la Fig.5 et Fig.5a.

La **Fig.7** représente la coupe des accessoires à verdissement permanent (4) de deux bacs paysagers micro pelouse (4f) fixés à un mobiliers (A) par les moyens décoratifs (5c) de fixation divers (5). Un moyen (5c) maintient également un moyen de dissimulation (1a). Lesdits bacs (4f) comportent des réserves d'eau (C3), en option lesdits bacs peuvent être reliés avec au moins un des réservoirs d'eau du dispositif (A), notamment par les moyens (8a, 8b, 8c). Chaque bac (4f) est divisé en compartiments (9) par des parois de séparation (9a) destinées à retenir la terre (12) et servir d'un support pour la flore afin de créer, en plus, une éco -surface verticale. Lesdits compartiments (9) sont disposés de manière à constituer dudit bac (4f) un moyen paysager de la culture du gazon (1a) en terrasses pour optimiser les plantations. Leur face inférieure oblique est considéré comme surface active (H3) car elle permet de maximiser l'ensoleillement des végétations placés en position inférieure. Les parois (9a) comportent des perforations (8) pour l'évaporation de l'eau et pour une meilleure répartition de son évacuation. Lesdits bacs (4f) peuvent avoir toute forme et peuvent se fixer notamment : aux éléments du dispositif (A), aux murs, et comporter des moyens permettant les brancher aux réservoirs du dispositif (A) et/ou à la gouttière.

La **Fig.8** représente une paroi verticale ou horizontale (H, G) maintenue par un système de guidage et de maintien à feuillure simple (5d). Le panneau (H, G) comporte des moyens de dissimulation (1a) structurés pour diriger l'écoulement des eaux pluviales selon les flèches pour éviter p. ex. le ruissellement et faciliter l'aération.

La **Fig.8a** représente un panneau paysager (H1) structuré de manière à pouvoir loger trois plateaux amovibles micro pelouses (4a) de la culture en terrasses chevauchés comme en

Fig.3. c.-à-d. la position la plus optimal pour agrandir une surface utile à culture permanente.

La **Fig.8b** représente un détail du rebord d'un panneau ou paroi à double feuillure (5e) comportant des mèches fines d'étanchéité (5f) augmentant l'étanchéité de l'embase (A) et ses éléments structuraux.

La **Fig.9** représente un détail d'une coupe d'un panneau ou une paroi (H) montrant des ouies obliques d'aération (7a) munies en partie supérieure de protubérances (7b) pour éviter le ruissellement et faciliter l'aération.

La **Fig.10** représente l'extrémité de plante artificielle fixée dans le bloc pré-percé (13). Le bloc (13) à travers la paroi (H) est lié avec le bloc (13a) par tout moyen de fixation : vissage, emboîtage, etc. afin de constituer un moyen de maintien (13) de la plante artificielle.

La **Fig.10a** représente un moyen de maintien constitué d'un monobloc pré-percé (13) traversant la paroi (H). L'extrémité ou queue du moyen de dissimulation (1a) se fixe en enlaçant ledit bloc (13).

La **Fig.11** montre une variante d'un dispositif (A) un mobilier serre paysager (A7). Ladite serre (A7) comporte trois tiroirs (14) aptes à recevoir des cultures diverses notamment de légumes. Pour favoriser les expositions solaires ces tiroirs (14) comportent des pieds rabattables, escamotables (15) disposant des roues (15a), facilitant les déplacements de tiroirs. Ladite serre (A7) comporte une table rétractable à manger (G2) (dans une version elle dispose des pieds rétractables - non présenté) et un moyen de protection (4g) d'un plateau micro pelouses (4a).

Un accessoire (4g) protège la surface engazonnée p. ex. contre les oiseaux ; il peut comporter divers moyens de fixation (5) dont les moyens (5g) visibles sur le dessin. Le moyen (5g) est apte à être enfoncé en terre, fixé sur le plateau (4a) ou un dispositif (A). La **Fig.11a** représente la coupe du mobilier serre (A7) à tiroirs tel que représenté en **Fig**.**11**. La **Fig.12** montre une variante transparente d'un dispositif (A) de forme circulaire ou ovale (A8) pour stocker un arbuste notamment un sapin de Noël avec des guirlandes lumineuses. Ce mobilier (A8) est composé d'éléments emboîtables et démontables aptes à être stockés dans un autre mobilier paysager (A). Pour utilisation constante il est apte à comporter tout élément du dispositif paysager (A) . Il est muni de moyens de ventilation (7) naturel et/ou mécanique aptes à être fermés ou ouverts, p. ex. par glissement d'une surface perforée aménagée sur les parois et maintenue par un système de guidage et de maintien à feuillure simple (non présenté).

La **Fig.13** représente un mobilier (A) ou un accessoire (4) dudit mobilier permettant par la forme de sa paroi inclinée (2d) de guider l'écoulement du vent, selon la flèche (Y1), vers une mini-turbine éolienne p.ex. de type Savonius (2c).

La **Fig.14** montre deux dispositifs (A) permettant par la forme des parois - convexe (2e) et plane (2b) - de diriger l'écoulement du vent selon la direction souhaitée : horizontale, verticale vers le haut ou vers le bas. Ce deux mobiliers disposent des réservoirs verticaux (C5) tout le long de leurs parois et de leur porte.

Les accessoires (4) peuvent également présenter des formes spécifiques que les dispositifs (A), pour avoir la même propriété afin orienter l'écoulement du vent.

La **Fig.15** montre un mobilier (A) comportant à son intérieur des mini-turbines éoliennes (2c) disposées sur plusieurs niveaux (non présentés) et deux compartiments (C7), (C8) de stockage fermé. Lesdits moyens (C7), (C8) coulissent de manière naturel et/ou mécanique selon la flèche (Y) et peuvent assurer un rôle de paravent ou d'isolement de plusieurs micro-turbines. La porte (H1) est de forme inclinée pour diriger l'écoulement du vent. Non visibles sur le dessin, les moyens de verdissement permanent et/ou des réservoirs verticaux permettent d'atténuer le bruit desdites éoliennes.

L'invention n'est pas limitée aux exemples de réalisation ci-dessus.

On peut notamment combiner entre elles différentes particularités de réalisation des exemples qui viennent d'être décrits.

Dans toute la description y compris les revendications l'expression « dispositifs non paysagers » doit être comprise comme un moyen :
- qui participe à l'état paysager,
- ou qui bénéficie de l'état paysager d'un autre moyen paysager, p. ex.
le dispositif (A) peut présenter l'état paysager à l'intérieur et avoir une partie de sa structure transparente pour rendre visible dudit l'effet paysager à l'extérieur, pour constituer un système paysager.

Dans toute la description y compris les revendications, l'expression « comportant un » doit être comprise comme étant synonyme de « comportant au moins un », sauf si le contraire est spécifié.

Dans toute la description y compris les revendications, l'expression « amovible ou fixe » doit être comprise comme « au moins temporairement fixé » et s'applique aux tous les éléments constructifs du dispositif (A) et ses accessoires sauf dans le cas ou il est préférable qu'ils soit non amovible pour des raisons de difficultés de la réalisation industrielle ou augmentation des coûts industriels.

## Revendications

1. **Dispositif** d'aménagement paysager (A) comprenant
- une embase constituée d'au moins un matériau formant une structure destiné au stockage d'objets divers, comprenant au moins un volume ouvert et/ou apte à être fermé,
- un volume conçus pour des plantes artificielles ou pour cultiver des plantes naturelles à l'extérieur de ladite embase,
**caractérisé en ce que** le dispositif d'aménagement paysager (A) comprend au moins un moyen d'aménagement paysager végétal naturel constitué de cultures végétales (1a) destinées à produire de l'oxygène et absorber le gaz carbonique tout au long de l'année ou durant le maximum de l'année selon le climat,
**en ce que** lesdits moyens cohabitent avec des moyens destinés à se fixer au moins temporairement au dispositif (A), à savoir :
- un moyen de stockage d'eaux de pluie et d'arrosage récupérées, tel qu'un réservoir vertical (C5), un réservoir horizontal (C4, C3),
- un moyen de stockage sécuritaire (C), constitué par au moins un moyen de stockage ouvert (C1) et/ou un moyen de stockage clos (C2) d'objets divers (3) tels qu'un étendoir de linge (3a), une unité extérieure de climatisation (3b), des végétaux (1a), un vélo, un appareil électroménager, une prise électrique.

2. Dispositif d'aménagement paysager (A) selon la revendication 1, **caractérisé en ce que** le dispositif (A) et/ou un accessoire du dispositif (A), comprend au moins un moyen de récupération d'énergies renouvelables destiné à se fixer au moins temporairement à l'extérieur et/ou à l'intérieur du dispositif (A) tels qu'un capteur solaire (2), une mini-turbine éolienne (2c), fonctionnant en toute autonomie ou en collaboration avec des moyens destinés à diriger des rayons solaires et/ou l'écoulement du vent tels qu'une surface inclinée (2d), une paroi plate (2b), une surface courbée et saillante (2e), un réflecteur (2a) des rayons solaires.

3. Dispositif d'aménagement paysager (A) selon la revendication 1 ou 1 et 2, **caractérisé en ce qu'**il comprend au moins un accessoire qui participe aux aménagements paysagers ou qui bénéficie des aménagements paysagers végétal et/ou non végétal, tels qu'un moyen (4), moyen (A5), un bac à suspendre (4f), un plateau- mixte (4b) destiné à la séparation des racines courtes et longues exigeant différentes profondeurs de terre, un moyen (4c) destiné à la séparation des racines des cultures qui ne se supportent pas, un cache paysager (1c), un moyen (4e, 4i, 4j, 11) destiné à régler le niveau de la hauteur de différents pots de fleur et permettant d'obtenir un aspect harmonieux du décor végétal,
**en ce que** ledit accessoire cohabite ou collabore avec au moins un moyen du dispositif (A) tels qu'un moyen de dissimulation et d'intégration (1), un moyen de récupération d'énergies renouvelables, un moyen de récupération d'eau, un moyen d'irrigation.

4. Dispositif d'aménagement paysager (A) selon l'une des revendications précédentes, **caractérisé en ce qu'**il comprend au moins un moyen d'harmonisation et/ou d'occultation et/ou d'intégration (1) tels qu'une flore artificielle (1b), un matériau (1) assurant l'effet de trompe l'oeil ou similitude d'aspect naturel imitant un environnement proche, des moyens destinés à constituer une vue extérieure paysagère (F) visible du côté de la rue et/ou une vue intérieure paysagère (E) visible par l'utilisateur.

5. Dispositif d'aménagement paysager (A) selon l'une des revendications précédentes, **caractérisé en ce qu'**il est au moins partiellement constitué d'un moyen de protections antithermiques (4h) tels qu'un ensemble des écrans en matières divers, des filmes plastiques exfoliatifs, des anti-rayonnement, des étanches ou respirant, des perméables à la vapeur d'eau.

6. Dispositif d'aménagement paysager (A) selon l'une des revendications précédentes, **caractérisé en ce que** le dispositif (A) et les moyens de stockage d'eau récupérée tels que l'eaux de pluie, l'eaux d'arrosage récupérées, les condensas d'une unité extérieure de climatisation, comportent des moyens de collecte compatibles et interconnectables naturels et/ou mécaniques d'écoulement et de distribution des eaux (8) tels qu'une perforation (8e), une tuyauterie (8b), un robinet (8c), branchement à une gouttière, une pompe à eau, une pente des parois, un filtre d'épuration (8f), destinés à constituer un circuit d'irrigation, de l'humidification de la flore et/ou d'évacuation du trop plein.

7. Dispositif d'aménagement paysager (A) selon l'une des revendications précédentes, **caractérisé en ce qu'**il comporte au moins un moyen tels qu'un matériau isolant, des mèches d'étanchéité (5f), une configuration d'un réservoir d'eau (C3) entourant un objet, un moyen de protection antithermique (4h), destiné à assurer au moins une fonction telle qu'une fonction d'étanchéité, une fonction d'isolation thermique, une fonction d'isolation phonique.

8. Dispositif d'aménagement paysager (A) selon l'une des revendications précédentes, **caractérisé en ce qu'**il comporte au moins un moyen de ventilation (7) naturel et/ou mécanique tels qu'une bouche d'aération, une ouie oblique (7a), un dispositif de ventilation électrique (7a), destiné à aérer, ventiler les objets stockés et les moyens structurels du dispositif (A).

9. Dispositif d'aménagement paysager (A) selon l'une des revendications précédentes, **caractérisé en ce qu'**il comprend au moins un des moyens, à savoir :
- un moyen rétractable et/ou pliable tels qu'une étagère perforée (6a), une chaise, une table perforée (G2), un support en saillie (Dl) ou temporairement saillant ;
- un moyen de fermeture naturel et/ou mécanique tels qu'un placard coulissant (C6, C7), un abattant ou une membrane déroulable (G1), une porte paysagère (H1), une paroi (G, H);
- un moyen de fixation (5) sécuritaire tels qu'un support (5a), un moyen décoratif (5c), une cavité (5b) pour un parasol, le cadre (4d), un moyen (13), destiné à assurer au moins une solidarisation temporaire orientable ou non orientable ;
- des moyens de déplacements de tiroirs (14) tels que des pieds rabattables, des pieds escamotables (15) ;
- un moyen tels qu'une perforation (8e, 7a), une protubérance (7b), destiné à collaborer avec tout moyen du dispositif (A) tels qu'un moyen de ventilation, un moyen de stockage, un moyen de distribution des eaux.

10. Dispositif d'aménagement paysager (A) selon l'une des revendications précédentes, **caractérisé en ce que** au moins un dispositif (A) et/ou un accessoire (4) comprend au moins un des moyens de protection fixé au moins temporairement, tel que :
- un moyen (4g) conformé de manière à occulter une surface des végétaux des pluies abondantes ou des rayons solaires ou des oiseaux ;
- un moyen (A5) comprenant des parois verticales (H) non uniformes en surface ou en hauteur destiné à protéger ou occulter au moins un moyen tels qu'un autre dispositif (A), un accessoire (4), un objet (3).

11. Dispositif d'aménagement paysager (A) selon l'une des revendications précédentes, **caractérisé en ce que** le dispositif (A) et/ou un accessoire comprend au moins un des moyens tels que :
- une surface active telle qu'une surface à terrassement ou/et à terrassement chevauché (H1) destiné à agrandir la surface utile d'une culture végétale (1a), à augmenter la capacité d'exploitation de l'espace aérien et produire le maximum d'oxygène, une surface oblique (H3) destiné à maximiser l'ensoleillement des végétations (1a) placées en position inférieure dudit terrassement ;
- une surface comprenant un matériau transparent ou translucide destiné à assurer au moins une fonction telle qu'une fonction de visibilité d'un espace intérieur paysager (A8), une fonction de visibilité d'un dispositif (A) occulté ou couvert par un autre dispositif (A), une fonction d'exposition solaire d'une culture végétale en assurant la fonction de serre (A7);
- une structure composée d'un volume creux pour récupérer et stocker l'eau tels que les pieds (H3), les parois horizontales (H) ;
- une structure composée d'éléments emboîtables et démontables tels qu'un dispositif (A8) destiné à être stockés dans un autre dispositif paysager (A).

12. Dispositif d'aménagement paysager (A) selon l'une des revendications précédentes, **caractérisé en ce que** le dispositif (A) est conformé de manière à constituer des systèmes paysagers (S) permettant les configurations et reconfigurations, et est destiné à assurer un effet optimal de paysage naturel pour conserver ou reconstruire une harmonie avec l'environnement proche tel qu'un balcon, une baie vitrée, une façade d'immeuble.

13. Dispositif d'aménagement paysager (A) selon l'une des revendications précédentes, **caractérisé en ce qu'**il est conformé de manière à constituer, en au moins une partie, la structure environnante telle qu'une façade d'immeuble, structure de balcon, notamment en étant au moins partiellement encastré et/ou incorporé dans cette structure environnante.

14. Dispositif d'aménagement paysager (A) selon l'une des revendications précédentes, **caractérisé en ce qu'**il constitue au moins un moyen tel qu'un mobilier paysager (A1, A2, A3, A6, A8, A9), un mobilier serre paysager (A7), un volume cache paysager (A4 , A5), destiné à assurer le reconditionnement paysager harmonieux et esthétique, de toute image ou tout objet disgracieux et à protéger contre les intempéries.

## Patentansprüche

1. Vorrichtung zur Landschaftsgestaltung (A), die folgendes aufweist
- eine Basis bestehend aus mindestens einem Material, das eine zur Lagerung verschiedener Gegenstände bestimmte Struktur bildet, umfassend mindestens ein offenes und/oder zum Geschlossen werden geeignetes Volumen,
- ein Volumen, das für künstliche Pflanzen oder zum Kultivieren von natürlichen Pflanzen außerhalb der Basis gestaltet ist,
**dadurch gekennzeichnet, dass** die Vorrichtung zur Landschaftsgestaltung (A) mindestens eine Einrichtung zur Landschaftsgestaltung mit natürlichen Pflanzen bestehend aus Pflanzenkulturen (1a) aufweist, die dazu bestimmt sind, je nach Klima, während des gesamten Jahres oder während der meisten Zeit des Jahres Sauerstoff zu produzieren und Kohlendioxidgas zu absorbieren, dadurch, dass die Einrichtungen mit Einrichtungen zusammen vorhanden sind, die dazu ausgelegt sind, sich zumindest zeitweise an die Vorrichtung (A) anzuheften, und zwar:
- eine Speichereinrichtung für zurückgewonnenes Regen- und Gießwasser, wie ein vertikales Reservoir (C5), ein horizontales Reservoir (C4, C3),
- eine sichere Speichereinrichtung (C), bestehend aus mindestens einer offenen Speichereinrichtung (C1) und/oder einer abgeschlossenen Speichereinrichtung (C2) für verschiedene Gegenstände (3), wie ein Wäschehalter (3a), eine Außenklimaanlageeinheit (3b), eine Vegetation (1a), ein Fahrrad, ein elektrisches Haushaltsgerät, eine Steckdose.

2. Vorrichtung zur Landschaftsgestaltung (A) nach Anspruch 1, **dadurch gekennzeichnet, dass** die Vorrichtung zur Landschaftsgestaltung (A) und/oder ein Accessoire der Vorrichtung (A) mindestens eine Einrichtung zum Gewinnen erneuerbarer Energien aufweist, die dazu ausgelegt ist, sich zumindest zeitweise außen und/oder innen an die Vorrichtung (A) anzuheften, wie ein Sonnenkollektor (2), eine Miniaturwindtizrbine (2c), die völlig eigenständig und/oder zusammenwirkend mit Einrichtungen arbeitet, die dazu ausgelegt sind, Sonnenstrahlen und/oder Windströmung zu lenken, wie eine geneigte Fläche (2d), eine flache Wand (2b), eine gekrümmte und vorspringende Fläche (2e), ein Reflektor von Sonnenstrahlen (2a).

3. Vorrichtung zur Landschaftsgestaltung (A) nach Anspruch 1 oder 1 und 2, **dadurch gekennzeichnet, dass** sie mindestens ein Accessoire aufweist, das an Landschaftsgestaltungen teilhat oder das von pflanzlichen oder nichtpflanzlichen Landschaftsgestaltungen profitiert, wie Einrichtung (4), Einrichtung (A5), Einhängeschale (4f), Mischplatte (4b), die dazu ausgelegt ist, lange Wurzeln und kurze Wurzeln, die verschiedene Erdtiefen erfordern, zu trennen, Einrichtung (4c), die dazu ausgelegt ist, lange Wurzeln der Kulturen zu trennen, die unverträglich sind, eine Geländeabdeckung (1c), eine Einrichtung (4e, 4i, 4j, 11), die dazu ausgelegt ist, das Höhenniveau von verschiedenen Blumentöpfen zu regulieren, und die es erlaubt, ein harmonisches Aussehen der Pflanzendekoration zu erhalten, dadurch, dass das Accessoire mit mindestens einer Einrichtung der Vorrichtung (A) zusammen existiert oder zusammenwirkt, wie eine Einrichtung zum Verbergen und Zusammenführen (1), eine Einrichtung zum Gewinnen erneuerbarer Energien, eine Einrichtung zum Gewinnen von Wasser, eine Bewässerungseinrichtung.

4. Vorrichtung zur Landschaftsgestaltung (A) nach einem der vorangehenden Ansprüche, **dadurch gekennzeichnet, dass** sie mindestens eine Harmonisierungs- und/oder Abschirmungseinrichtung (1) aufweist, wie künstliche Flora (1b), ein Material (1), das die Trompe d'oeil-Wirkung oder die Ähnlichkeit mit einem natürlichen Aussehen sicherstellt, das ein nahe Umgebung nachbildet, Einrichtungen, die dazu ausgelegt sind, eine strassenseitig sichtbare Landschaftsansicht von außen (F) und/oder eine Landschaftsansicht von innen (E), die der Anwender sieht, zu schaffen.

5. Vorrichtung zur Landschaftsgestaltung (A) nach einem der vorangehenden Ansprüche, **dadurch gekennzeichnet, dass** sie mindestens teilweise aus einer wärmedämmenden Schutzeinrichtung (4h) besteht, wie ein Ensemble von Schirmen verschiedener Materialien, abziehbaren, dichten oder atmenden, strahlenschützenden, wasserdampfdurchlässigen Kunststofffolien.

6. Vorrichtung zur Landschaftsgestaltung (A) nach einem der vorangehenden Ansprüche, **dadurch gekennzeichnet, dass** die Vorrichtung (A) und die Einrichtungen zur Speicherung von zurückgewonnenem Wasser, wie Regenwasser, zurückgewonnenes Gießwasser, Kondensate einer äußeren Klimaanlage, kompatibel und untereinander verbindbare natürliche und/oder mechanische Sammeleinrichtungen zum Fließenlassen und Verteilen von Wasser (8) aufweisen, wie Perforation (8e), Rohrleitungen (8b), ein Wasserhahn (8c), Abzweigung an einer Rinne, eine Wasserpumpe, ein Wandgefälle, ein Klärfilter (8f), die dazu ausgelegt sind, einen Bewässerungskreislauf aufzubauen, zum Befeuchten der Flora und/oder zum Abführen des Überlaufs.

7. Vorrichtung zur Landschaftsgestaltung (A) nach einem der vorangehenden Ansprüche, **dadurch gekennzeichnet, dass** sie mindestens eine Einrichtung aufweist, wie Isoliermaterial, Dichtungsfasern (5f), eine Konfiguration eines einen Gegenstand umgebenden Wasserreservoirs (C3), eine Wärmedämmungseinrichtung (4h), die dazu ausgelegt ist, mindestens eine Funktion, wie eine Dichtigkeitsfunktion, eine Wärmedämmungsfunktion, eine Lärmdämmungsfunktion, sicherzustellen.

8. Vorrichtung zur Landschaftsgestaltung (A) nach einem der vorangehenden Ansprüche, **dadurch gekennzeichnet, dass** sie mindestens eine natürlichen und/oder mechanische Belüftungseinrichtung (7) aufweist, wie ein Belüftungsventil, ein Schrägloch (7a), eine elektrische Belüftungsvorrichtung (7a), die dazu ausgelegt ist, die gelagerten Gegenstände zu belüften, und die strukturgebenden Einrichtungen der Vorrichtung (A).

9. Vorrichtung zur Landschaftsgestaltung (A) nach einem der vorangehenden Ansprüche, **dadurch gekennzeichnet, dass** sie mindestens eine der folgenden Einrichtung aufweist, und zwar:
- eine einziehbare oder faltbare Einrichtung, wie ein perforierte Etagere (6a), einen Stuhl, einen perforierten Tisch (G2), einen vorspringenden oder zeitweise vorspringenden Träger (D1);
- eine natürliche und/oder mechanische Verschlusseinrichtung, wie ein Gleitschrank (C6, C7), ein Fallbrett oder ein entrollbares Element (G1), eine Türe nach außen zur Landschaft (H1), eine Wand (G, H):
- eine sichere Befestigungseinrichtung (5), wie ein Träger (5a), eine Dekorationseinrichtung (5c), eine Nische (5b) für einen Sonnenschirm, der Rahmen (4d), eine Einrichtung (13), die dazu ausgelegt ist, zumindest einen zeitweisen orientierbaren oder nicht orientierbaren Zusammenschluss sicherzustellen,
- Verschiebungsmittel von Schubladen (14), wie klappbare Füße, versenkbare Füße (15);
- eine Einrichtung, wie eine Perforation (8e, 7a), eine Ausstülpung (7b), die dazu ausgelegt ist, mit jeder Einrichtung der Vorrichtung (A) zusammenzuwirken, wie eine Belüftungseinrichtung, eine Speichereinrichtung, eine Wasserverteilungseinrichtung.

10. Vorrichtung zur Landschaftsgestaltung (A) nach einem der vorangehenden Ansprüche, **dadurch gekennzeichnet, dass** mindestens eine Vorrichtung (A) und/oder ein Accessoire (10) zumindest eine der Schutzeinrichtungen aufweist, die zumindest zeitweise befestigt ist, wie:
- eine Einrichtung (4g), die so angepasst ist, dass sie eine Vegetationsfläche vor überreichlichen Regenfällen oder Sonnenstrahlen oder Vögeln verdeckt;
- eine Einrichtung (A5), die in der Oberfläche oder in der Höhe nicht einheitliche vertikale Wände (H) aufweist, die dazu ausgelegt sind, mindestens eine Einrichtung, wie eine andere Vorrichtung (A), ein Accessoire (4), ein Gegenstand (3), zu schützen oder zu verbergen.

11. Vorrichtung zur Landschaftsgestaltung (A) nach einem der vorangehenden Ansprüche, **dadurch gekennzeichnet, dass** die Vorrichtung (A) und/oder ein Accessoire zumindest eine der Einrichtungen aufweist, wie:
- eine aktive Fläche wie eine terrassierte Fläche und/oder eine terrassierte überlappende Fläche (H1), die dazu ausgelegt ist, die Fläche zu vergrößern, die für eine Pflanzenkultur (1a) geeignet ist, das Vermögen der Ausnutzung des Luftraums zu steigern und das Maximum an Sauerstoff zu erzeugen, eine schräge Fläche (H3), die dazu ausgelegt ist, die Sonnenbestrahlung der Vegetationen (1a), die an der Stelle unterhalb der Terrassierung angeordnet sind, zu maximieren;
- eine Fläche, die ein transparentes oder durchscheinendes Material aufweist, das dazu ausgelegt ist, eine Funktion sicherzustellen, wie eine Funktion der Sichtbarkeit eines Landschaftsinnenraums (A8), eine Funktion der Sichtbarkeit einer durch eine andere Vorrichtung (A) verdeckten oder verborgenen Vorrichtung (A), eine Funktion der Sonnenexposition einer Pflanzenkultur unter Sicherstellung der Gewächshausfunktion (A7);
- eine Struktur bestehend aus einen Hohlvolumen zur Gewinnung und Speicherung von Wasser, wie die Füße (H3), die horizontalen Wände (H);
- eine Struktur bestehend aus nestbaren und demontierbaren Elementen, wie eine Vorrichtung (A8), die dazu ausgelegt ist, in einer anderen Landschaftsvorrichtung (A) gespeichert zu werden.

12. Vorrichtung zur Landschaftsgestaltung (A) nach einem der vorangehenden Ansprüche, **dadurch gekennzeichnet, dass** die Vorrichtung (A) so angepasst ist, dass Landschaftssysteme (S) aufgebaut werden, die Ausgestaltungen und Umgestaltungen erlauben, und die dazu ausgelegt ist, eine optimale natürliche Landschaftswirkung sicherzustellen, um eine Harmonie mit der nahen Umgebung zu bewahren oder wiederaufzubauen, wie ein Balkon, eine Glasveranda, eine Fassade eines Wohnblocks.

13. Vorrichtung zur Landschaftsgestaltung (A) nach einem der vorangehenden Ansprüche, **dadurch gekennzeichnet, dass** sie so angepasst ist, dass zumindest teilweise die Umweltstruktur aufgebaut wird, wie eine Wohnblockfassade, Balkonstruktur, insbesondere indem sie zumindest zum Teil in diese umgebenden Struktur eingebaut und/oder einverleibt ist.

14. Vorrichtung zur Landschaftsgestaltung (A) nach einem der vorangehenden Ansprüche, **dadurch gekennzeichnet, dass** sie mindestens eine Einrichtung aufbaut, wie ein Mobiliar zur Landschaftsgestaltung (A1, A2, A3, A6, A8, A9), ein Gewächshausmobiliar zur Landschaftsgestaltung (A7), ein Kaschiervolumen zur Landschaftsgestaltung (A4, A5), die dazu ausgelegt sind, die harmonische und ästhetische Landschaftswiederherstellung eines jeden unschönen Bildes oder Gegenstandes zu gewährleisten und gegen Witterungseinflüsse zu schützen.

## Claims

1. Landscaping -arrangement device (A) comprising
- a base consisting of at least one material forming a structure intended for storing various objects, comprising at least one space that is open and/or able to be closed,
- a space designed for artificial plants or for cultivating natural plants outside said base,
**characterised in that** the landscaping-arrangement device (A) comprises at least one natural plant landscaping arrangement means consisting of plant cultures (1a) intended to produce oxygen and to absorb carbon dioxide throughout the year or during the maximum part of the year according to the climate,
**in that** said means cohabit with means intended to be fixed at least temporarily to the device (A), namely:
- a means for storing recovered rain and sprinkling water, such as a vertical reservoir (C5) or a horizontal reservoir (C4, C3),
- a secure storage means (C) consisting of at least one open storage means (C1) and/or a closed storage means (C2) for various objects (3) such as a clothes line (3a), an outdoor air-conditioning unit (3b), plants (1a), a bicycle, a domestic electrical appliance or an electrical socket.

2. Landscaping-arrangement device (A) according to claim 1, **characterised in that** device (A) and/or an accessory of the device (A) comprises at least one means for recovering renewable energy intended to be fixed at least temporarily to the outside and/or inside of the device (A), such as a solar collector (2), a mini wind turbine (2c), functioning in a completely self-contained manner and in cooperation with means intended to direct solar rays and/or the wind, such as an inclined surface (2d), a flat wall (2b), a curved projecting surface (2e) or a solar-ray reflector (2a).

3. Landscaping-arrangement device (A) according to claim 1 or claims 1 and 2, **characterised in that** it comprises at least one accessory that participates in the landscaping arrangements or that benefits from the plant and/or non-plant landscaping arrangements, such as a means (4), means (A5), a suspended trough (4f), a mixed tray (4b) intended to separate short and long roots requiring different depths of earth, a means (4c) intended for separating the roots of the plants that do not support themselves, a landscaping cover (1c), a means (4e, 4i, 4j, 11) intended to adjust the level of the height of various flower pots and making it possible to obtain a harmonious appearance of the plant décor, **in that** said accessory cohabits or cooperates with at least one means of the device (A) such as a concealing and integration means (1), a means for recovering renewable energies, a water-recovery means or an irrigation means.

4. Landscaping-arrangement device (A) according to one of the preceding claims, **characterised in that** it comprises at least one harmonisation and/or obscuring and/or integration means (1) such as an artificial flora (1b) a material (1) providing the trompe l'oeil or natural appearance similitude effect imitating a close environment, means intended to constitute an external landscape view (F) visible from the side of the street and/or an interior landscaping view (E) visible to the user.

5. Landscaping-arrangement device (A) according to one of the preceding claims, **characterised in that** it at least partially consists of an anti-thermal protection means (4h) such as a set of screens made from various materials, exfoliative plastic films, anti-radiation devices, airtight or breathing devices, or devices permeable to water vapour.

6. Landscaping-arrangement device (A) according to one of the preceding claims, **characterised in that** the device (A) and the means for storing recovered water such as rainwater or recovered sprinkling water, or condensates from an external air-conditioning unit, comprise natural and/or mechanical compatible and interconnectable collection means for the flow and distribution of water (8) such as a perforation (8e), a pipe (8b), a tap (8c), connection to a channel, a water pump, a sloping wall or a purification filter (8f), intended to constitute a flora irrigation or moistening circuit and/or an overflow discharge.

7. Landscaping-arrangement device (A) according to one of the preceding claims, **characterised in that** it comprises at least one means such as insulating material, waterproofing wicks (5f), a configuration of a water reservoir (C3) surrounding an object, an anti-thermal protection means (4h) intended to provide at least one function such as a waterproofing function, a thermal insulation function or a sound insulation function.

8. Landscaping-arrangement device (A) according to one of the preceding claims, **characterised in that** it comprises at least one natural and/or mechanical ventilation means (7) such as a ventilation nozzle, an oblique orifice (7a) or an electrical ventilation device (7a) intended to aerate or ventilate the object stored and the structural means of the device (A).

9. Landscaping-arrangement device (A) according to one of the preceding claims, **characterised in that** it comprises at least one of the means, namely:
- a retractable and/or foldable means such as a perforated shelf (6a), a chair, a perforated table (G2), a projecting or temporarily projecting support (D1);
- a natural and/or mechanical closure means such as a sliding cupboard (C6, C7), a flap or an unrollable membrane (G1), a landscape gate (H1), a wall (G, H);
- a security fixing means (5) such as a support (5a), a decorative means (5c), a cavity (5b) for a parasol, the frame (4d), a means (13) intended to provide at least one orientable or non-orientable temporary securing;
- means for moving drawers (14) such as foldable feet or retractable feet (15);
- a means such as a perforation (8e, 7a), a protuberance (7b), intended to cooperate with any means of the device (A) such as a ventilation means, a storage means or a water-distribution means.

10. Landscaping-arrangement device (A) according to one of the preceding claims, **characterised in that** at least one device (A) and/or an accessory (4) comprises at least one of the protection means fixed at least temporarily, such as:
- a means (4g) conformed so as to shelter a surface of the plants from copious rain and/or solar rays or birds;
- a means (A5) comprising vertical walls (H) that are not uniform on the surface or in height intended to protect or shield at least one means such as another device (A), an accessory (4) or an object (3).

11. Landscaping-arrangement device (A) according to one of the preceding claims, **characterised in that** the device (A) and/or an accessory comprises at least one of the means such as:
- an active surface such as a surface with terracing and/or overlapping terracing (H1) intended to enlarge the useful surface of plant cultivation (1a) to increase the capacity of use of air space and produce the maximum amount of oxygen, an oblique surface (H3) intended to maximise sunshine for the plants (1a) placed in a lower position of said terracing;
- a surface comprising a transparent or translucent material intended to provide at least one function such as a function of visibility of an interior landscaping space (A8), a function of visibility of a device (A) concealed or covered by another device (A), a function of solar exposure of plant cultivation by providing a greenhouse function (A7);
- a structure composed of a hollow space for recovering and storing water such as the feet (H3) and the horizontal walls (H);
- a structure composed of nestable and demountable elements such as a device (A8) intended to be stored in another landscaping device (A).

12. Landscaping-arrangement device (A) according to one of the preceding claims, **characterised in that** the device (A) is conformed so as to constitute landscaping systems (S) allowing the configurations and reconfigurations, and is intended to provide an optimum natural landscaping effect for preserving or reconstructing harmony with the close environment, such as a balcony, a glazed opening or a building façade.

13. Landscaping-arrangement device (A) according to one of the preceding claims, **characterised in that** it is conformed so as to constitute, in at least one part, the surrounding structure such as a building façade or a balcony structure, in particular while being at least partially embedded and/or incorporated in this surrounding structure.

14. Landscaping-arrangement device (A) according to one of the preceding claims, **characterised in that** it constitutes at least one means such as landscaping furniture (A1, A2, A3, A6, A8, A9), landscaping greenhouse furniture (A7) or a landscaping covering space (A4, A5), intended to provide harmonious and aesthetic landscape reconditioning of any unattractive image or object and to protect against bad weather.
